**Europäisches Patentamt**

**European Patent Office**

**Office Européen des brevets**

(19)

(11) Veröffentlichungsnummer: **0 233 951 B1**

(12) # EUROPÄISCHE PATENTSCHRIFT

(45) Veröffentlichungstag der Patentschrift:
02.01.91 Patentblatt 91/01

(51) Int. Cl.⁵: **G01M 3/02**

(21) Anmeldenummer: **85114257.0**

(22) Anmeldetag: **08.11.85**

(54) Einrichtung zur Kopplung eines Lecksuchgerätes mit einem Prüfling.

(43) Veröffentlichungstag der Anmeldung:
02.09.87 Patentblatt 87/36

(45) Bekanntmachung des Hinweises auf die
Patenterteilung:
02.01.91 Patentblatt 91/01

(84) Benannte Vertragsstaaten:
DE FR GB IT

(56) Entgegenhaltungen:
DE-A- 3 244 759

(73) Patentinhaber: Flink, Adam
Diepenbeekallee 13
D-5000 Köln 40 (DE)

(72) Erfinder: Flink, Adam
Diepenbeekallee 13
D-5000 Köln 40 (DE)

(74) Vertreter: Leineweber, Jürgen, Dipl.-Phys.
Nagelschmiedshütte 8
D-5000 Köln 40 (DE)

## Beschreibung

Die Erfindung bezieht sich auf eine Kopplungseinrichtung für ein Lecksuchgerät und für einen Prüfling, welcher mit einem Anschlußstutzen ausgerüstet ist, mit einem Gehäuse, das mit den erforderlichen Versorgungsleitungen verbindbar ist, und mit einem Anschlußwerkzeug, das von dem Gehäuse getragen ist.

Bei der industriellen Fertigung ist es aus Qualitäts-, Prüf- und Sicherheitsgründen immer häufiger erwünscht, hohle Bauteile vor ihrem Einbau auf Dichtheit zu prüfen. Das geschieht in der Regel durch eine integrale Lecksuche, bei der der Prüfling in eine Probenkammer eingebracht wird, innerhalb und außerhalb des Prüflings unterschiedliche Drücke erzeugt werden und danach auf der Seite des höheren Druckes ein Testgas, vorzugsweise Helium, eingelassen wird. Dringt Testgas von der Seite mit dem höheren Druck auf die Seite mit dem niedrigeren Druck, dann ist der zu prüfende Hohlkörper undicht. Bei Einrichtungen dieser Art müssen die Verbindungen zwischen dem Hohlkörper und dem Lecksuchgerät, das die notwendigen Versorgungs- und Meßgeräte wie Vakuumpumpe, Kompressor, Testgasquelle, Massenspektrometer, Spannungsversorgung, Steuereinrichtungen und dergleichen enthält, besonders sorgfältig ausgebildet bzw. dicht sein, da z. B. bei einer undichten Kopplungseinrichtung Testgas auf die Seite mit dem niedrigeren Druck dringt und damit der Hohlkörper als undicht gemeldet wird, obwohl dieses nicht der Fall ist.

Kopplungseinrichtungen der eingangs genannten Art, bei denen das Anschlußwerkzeug mit einer mechanischen Klemmvorrichtung ausgerüstet ist, sind bekannt. Weiterhin ist aus der DE-OS 32 44 759 eine Kopplungseinrichtung für automatisch ablaufende Lecksuchprozesse mit kurzen Taktzeiten bekannt. Bei diesen vorbekannten Einrichtungen ist nicht ohne weiteres erkennbar, ob der mit dem Werkzeug verbundene Anschlußstutzen des Prüflings seine ordnungsgemäße Betriebsstellung eingenommen hat.

Weiterhin ist die gleichzeitige Verwendung mehrerer der vorbekannten Koppeleinrichtungen innerhalb einer Probenkammer mit einigen Nachteilen verbunden. Die Verwendung mehrerer Koppeleinrichtungen ist dann erforderlich, wenn entweder ein Prüfling mehrere Anschlüsse hat oder wenn mehrere Prüflinge gleichzeitig auf Lecks untersucht werden sollen. Bei dieser Verfahrensweise besteht die Möglichkeit oder auch Notwendigkeit, daß bei einigen Lecksuchvorgängen eine der Kopplungseinrichtungen unbesetzt bleibt. Dieses ist der Fall, wenn z. B. die Anzahl der Anschlußstutzen an den Prüflingen wechselt oder wenn die vorhergehende Fördereinrichtung die erforderliche Anzahl von Prüflingen nicht bereitstellt. Aus einer nicht besetzten Koppeleinrichtung würde dann Testgas unmittelbar in die Probenkammer ausströmen, was zu einer fehlerhaften Undicht-Meldung des Lecksuchgerätes führt. Besonders schwerwiegend sind die Folgen dann, wenn die Nichtbesetzung einer Koppeleinrichtung oder der fehlerhafte Anschluß eines Prüflings vom Bedienungspersonal unbemerkt bleibt. Besteht die Notwendigkeit, eine oder mehrere Kopplungseinrichtungen unbesetzt zu lassen, weil die Anzahl der Anschlußstutzen am Prüfling sich verändert, dann sind bisher aufwendige Umrüstarbeiten notwendig gewesen, um die unerwünschte Verbindung zwischen Testgas- und Analysenraum bzw. sonstige Verbindung von Gas- und Vakuumleitungen der nicht besetzten Koppeleinrichtung zum Analysenraum zu verhindern.

Der vorliegenden Erfindung liegt die Aufgabe zugrunde, eine Kopplungseinrichtung der eingangs genannten Art zu schaffen, bei der die Möglichkeit der Feststellung der ordnungsgemäßen Besetzung durch den Anschlußstutzen eines Prüflings besteht.

Erfindungsgemäß wird diese Aufgabe dadurch gelöst, daß die Kopplungseinrichtung mit einem Kontakt ausgerüstet ist, der vom Anschlußstutzen des Prüflings in seiner Betriebsstellung betätigbar ist. Bei einer in dieser Weise ausgebildeten Kopplungseinrichtung besteht die Möglichkeit, den ordnungsgemäßen Anschluß des Prüflings und damit ihre Betriebsbereitschaft durch einen Impuls anzuzeigen. Solange dieser Impuls eine Steuereinheit noch nicht erreicht hat, ist entweder die betroffene Kopplungseinrichtung nicht besetzt oder nicht korrekt an den Anschlußstutzen des Prüflings angeschlossen. Der Betreiber hat dann die Möglichkeit, entweder den nicht ordnungsgemäßen Anschluß eines Prüflings zu korrigieren oder den Lecksuchprozeß nur in bezug auf die korrekt angeschlossenen Prüflinge ablaufen zu lassen. Die nicht- oder fehlbesetzte Kopplungseinrichtung bleibt außer Betrieb. Ein weiterer wesentlicher Vorteil besteht darin, daß Lecksuchprozesse, bei denen erfindungsgemäß ausgerüstete Kopplungseinrichtungen verwendet werden, mit Hilfe geeigneter Steuergeräte automatisierbar sind.

Die Kontaktgebung erfolgt zweckmäßigerweise elektrisch. Es besteht aber auch die Möglichkeit, einen pneumatisch arbeitenden Kontakt vorzusehen, dessen Funktion auf der Beeinflussung eines ausströmenden Gasstrahls beruht.

Weiterhin ist es zweckmäßig, eine oder mehrere Absperreinrichtungen vorzusehen, mit denen zumindest ein Teil der, vorzugsweise alle innerhalb der Kopplungseinrichtung mündenden, Gas zu- oder abführenden Versorgungsleitungen (z. B. Zwischenvakuum) absperrbar sind. Diese Absperreinrichtungen werden zweckmäßigerweise bei einer nicht besetzten Kopplungseinrichtung verschlossen, so daß im Innern dieser Gasleitungen verbliebene Helium-Reste beim Ablauf eines Lecksuchprozesses nicht in die Probenkammer gelangen können und dadurch Fehlmessungen verursachen.

Eine besonders vorteilhafte Weiterbildung der Erfindung besteht darin, daß ein der Stirnseite eines Prüflingsstutzens, der seine ordnungsgemäße Anschlußstellung eingenommen hat, zugeordneter Dorn als Kontaktgeber dient. Um das Ein- und Ausströmen von Gas in den Prüfling zu gewährleisten, weist dieser Dorn eine im wesentlichen schneidenförmig gestaltete Stirnseite auf. Gleichzeitig kann der Dorn verschiebbar innerhalb des Gehäuses der Kopplungseinrichtung angeordnet sein und als Absperreinrichtung dienen.

Weitere Vorteile und Einzelheiten der Erfindung sollen anhand von in den Figuren 1 bis 4 dargestellten Ausführungsbeispielen erläutert werden. Es zeigen :

Fig. 1 eine erfindungsgemäß ausgebildete Kopplungseinrichtung,

Figuren 2 und 3 seitliche Ansichten von verschiedenen Ausführungsformen des Kontaktdorns und

Fig. 4 ein Ausführungsbeispiel nach Fig. 1 mit einem zusätzlichen Winkelstück.

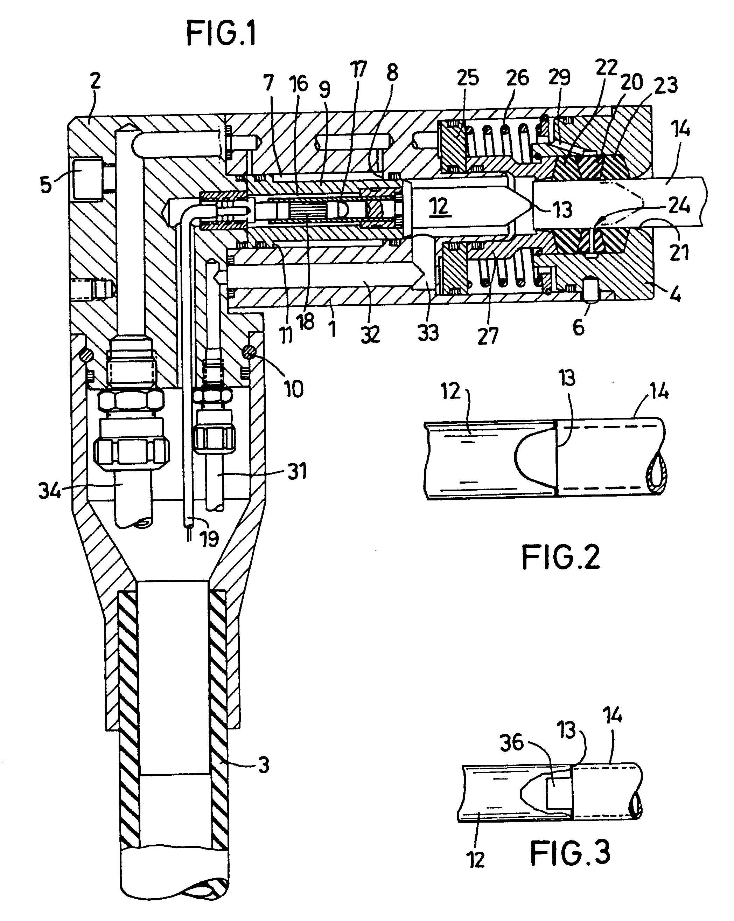

Die in Fig. 1 dargestellte Kopplungseinrichtung umfaßt das Gehäuse 1, das auf seiner einen Seite über das Winkelstück 2 mit der Schlauchleitung 3 verbunden ist und das auf seiner anderen Seite das Anschlußwerkzeug 4 trägt. Mittels der Schraube 5 ist das Winkelstück 2 vom Gehäuse 1 lösbar. Das Werkzeug 4 ist mit dem Gehäuse 1 über einen einzelnen nicht näher dargestellten Bajonettverschluß verbunden, zu dem der Stift 6 gehört. Zur Verbindung der Schlauchleitung 3 mit dem Winkelstück 2 dient eine Klammer 10, die ein Verdrehen des Winkelstücks 2 gegenüber der Schlauchleitung 3 erlaubt.

Innerhalb des Gehäuses 1 ist zentral eine Zylinderkammer 7 vorgesehen, die zum Winkelstück 2 und zum Werkzeug 4 hin offen und mit einer Abstufung 8 versehen ist. Innerhalb dieser Zylinderkammer 7 ist der Kolben 9 verschiebbar angeordnet. In seiner dargestellten linken Endstellung liegt er dem Winkelstück 2 an, das die Zylinderkammer 7 teilweise verschließt. Der Kolben 9 ist ebenfalls mit einer Abstufung 11 ausgerüstet, die der Abstufung 8 der Zylinderkammer in seiner rechten Endstellung anliegt.

Auf seiner dem Werkzeug 4 zugewandten Stirnseite trägt der Kolben 9 den Dorn 12, der eine im wesentlichen schneidenförmig gestaltete Stirnseite 13 aufweist. Die Länge des Dornes 12 ist so gewählt, daß seine Stirnseite 13 einen ordnungsgemäß in das Werkzeug 4 eingeführten Stutzen 14 eines im übrigen nicht dargestellten Prüflings berührt. Der Kolben 9 selbst weist einen zentralen Hohlraum 16 auf, in dem sich eine elektrisch leitend mit dem Dorn 12 verbundene, im übrigen jedoch isoliert angeordnete Hülse 17 befindet. In diese Hülse ist ein Kontaktstift 18 eingeschoben, der elektrisch isolierend am Winkelstück 2 befestigt ist und mit der elektrischen Leitung 19 in Verbindung steht, die das Winkelstück 2 und die Schlauchleitung 3 durchsetzt und zum nicht dargestellten zentralen Versorgungsgerät führt.

Das Werkzeug 4 hat eine zentrale Öffnung 21, in die der Anschlußstutzen 14 des auf Lecks zu untersuchenden Prüflings eingeführt wird. Die zentrale Öffnung weist eine zwei Dichtringe 22 und 23 sowie einen Zentrierring 20 umfassende Dichtung 24 auf. Diese dienen gleichzeitig der Abdichtung und dem Einspannen des Anschlußstutzens 14 im Werkzeug 4. Dazu ist stirnseitig am Gehäuse 1 ein Ringscheibenkolben 25 vorgesehen, der pneumatisch in Richtung Werkzeug 4 entgegen der Kraft der Feder 26 bewegbar ist. Mittels einer den Dorn 12 umgebenden Hülse 27 werden die Dichtringe 22 und 23 bei dem sich in Richtung Werkzeug 4 bewegenden Kolben 25 zusammengedrückt und bewirken dadurch das Einspannen des Anschlußstutzens 14. Zur Kontrolle der Dichtheit ist über dem Zwischenring 20 eine Zwischenabsaugung über die Bohrung 29 vorgesehen. Auch die weiteren Dichtungen der dargestellten Kopplungseinrichtung sind zweckmäßigerweise als Doppeldichtung mit Zwischenabsaugung ausgebildet.

Alle durch die Schlauchleitung 3 zum zentralen Gerät führenden Versorgungsleitungen, die über das Winkelstück 2 an das Gehäuse 1 angeschlossen sind, sind aus Übersichtlichkeitsgründen nicht dargestellt. Mit 31 ist eine Leitung bezeichnet, über die durch die Bohrungen 32 und 33 im Gehäuse 1 dem angeschlossenen Prüfling nach seiner Evakuierung Testgas zugeführt wird. Mit 19 ist die bereits beschriebene elektrische Leitung bezeichnet, über die ein elektrischer Impuls dem Zentralgerät zugeführt werden kann, wenn sich Dorn 12 und Anschlußstutzen 14 berühren. Über die Leitung 34 kann z. B. die Evakuierung des Prüflings erfolgen. Weitere Leitungen, über die die Bewegung der Kolben 9 und 25 bewirkt wird, sind nicht dargestellt.

Wird in das Werkzeug 4 der dargestellten Kopplungseinrichtung ein Stutzen 14 eingeführt, dann berührt dieser, wenn er seine ordnungsgemäße Stellung eingenommen hat, den Dorn 12. Mit dem dadurch bewirkten elektrischen Impuls kann unmittelbar danach eine Bewegung des Scheibenkolbens 25 eingeleitet und damit das Einspannen des Stutzens 14 im Werkzeug 4 bewirkt werden. Der elektrische Impuls wird weiterhin einer zentralen Steuereinheit zugeführt. Bei dem sich anschließenden Lecksuchprozeß werden alle Kopplungseinrichtungen, die einen Impuls an die zentrale Steuereinheit abgegeben haben, mit den zur Durchführung der Lecksuche erforderlichen Medien versorgt. Liegt von einer der Kopplungseinrichtungen ein elektrisches Signal nicht vor, dann wird bei dieser vor dem Beginn des Lecksuchprozesses der Kolben 9 und damit der Dorn 12 nach rechts bewegt. Diese Stellung ist gestrichelt angedeutet. Unmittelbar danach erfolgt die Betätigung des Kolbens 25 und damit ein Verschluß der Öffnung 21 im Werkzeug 4 mit der gleichen Dichtung 24, mit der auch die Abdichtung und Einspannung eines eingeführten Anschlußstutzens erfolgen würden. Durch diese Maßnahme wird sichergestellt, daß der Innenraum sämtlicher Versorgungsleitungen von der Probenkammer getrennt ist. Eventuell noch vorhandene Heliumreste innerhalb der Versorgungsleitungen können deshalb während der Evakuierungs- bzw. Prüfphase nicht in die Probenkammer gelangen.

Die Figuren 2 und 3 zeigen Ausführungsformen des Dorns 12 in Seitenansicht. Der Durchmesser des Dorns 12 ist jeweils dem Durchmesser des Anschlußstutzens 14 angepaßt. Damit einerseits ein sicherer Kontakt und andererseits ein relativ ungehindertes Ein- und Ausströmen von Gasen möglich ist, weist die Stirnseite 13 eine im wesentlichen schneidenförmige, vorzugsweise vergoldete Gestaltung auf. Bei kleineren Durchmessern (Fig. 3) kann zusätzlich eine zentrale Aussparung 36 vorgesehen sein, um den Gasdurchtritt nicht zu behindern.

Dorn 12 und Werkzeug 4 sind zweckmäßigerweise lösbar am Gehäuse 1 gehaltert, so daß eine einfache Umrüstung bei einem Durchmesserwechsel des Anschlußstutzens 14 möglich ist. Bei dem in Fig. 1 dargestellten Ausführungsbeispiel erfolgt das Umrüsten in der Weise, daß die Schraube 5 und der Bajonettverschluß 6 gelöst werden. Bei vom Winkelstück 2 getrenntem Gehäuse 1 erfolgt das Auswechseln des Dornes 12 mitsamt seinem Kolben 9. Der Durchmesser des neuen Dorns, der ebenfalls mit einem Kolben 9 ausgerüstet ist, entspricht dem Durchmesser der Öffnung 21 im ausgewechselten Werkzeug 4.

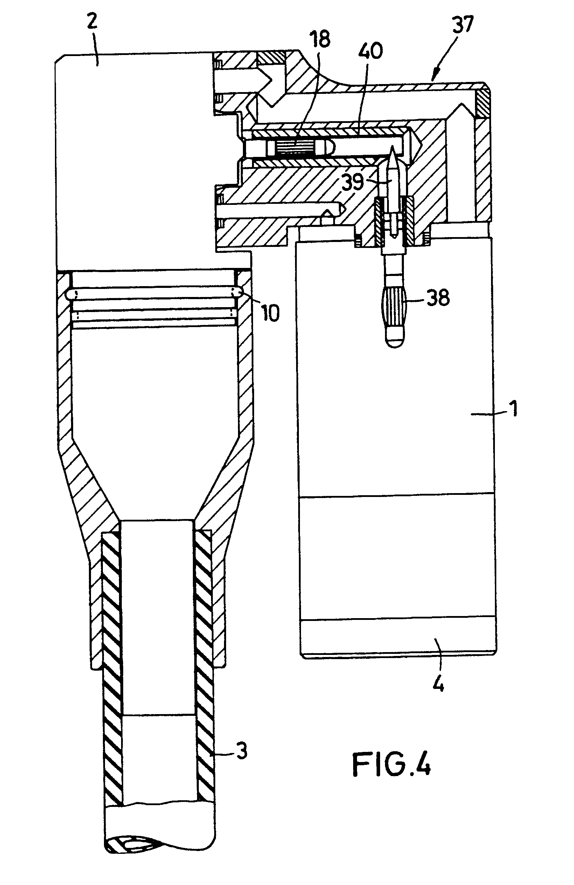

Fig. 4 zeigt die Möglichkeit, zwischen dem Winkelstück 2 und dem Gehäuse 1 ein weiteres Winkelstück 37 anzuordnen. Dieses ist auf seiner dem Winkelstück 2 zugewandten Seite so ausgebildet wie das Gehäuse 1. Auf seiner dem Gehäuse 1 zugewandten Seite ist es wie das Winkelstück 2 mit einem Kontaktstift 38 ausgerüstet. Dieser elektrisch isolierend im Winkelstück 37 gehalterte Kontaktstift 38 weist einen Dorn 39 auf. Dieser steht mit einer elektrisch isolierend angeordneten Hülse 40 in Verbindung, in die der Kontaktstift 18 des Winkelstücks 2 eingeschoben ist.

Das Winkelstück 37 ermöglicht die Umlenkung der Öffnung des Werkzeuges 4 um weitere 90°. Je nach Ausbildung des Winkelstückes 37 ist es damit möglich, die dargestellte Kopplungseinrichtung auf Prüflingsstutzen aufzusetzen, deren Längsachsen in einer Ebene liegen, die parallel zu der durch die Schlauchleitung 3 bestimmten Ebene liegt.

**Ansprüche**

1. Kopplungseinrichtung für ein Lecksuchgerät und für einen Prüfling, welcher mit einem Anschlußstutzen (14) ausgerüstet ist, mit einem Gehäuse (1), das mit den erforderlichen Versorgungsleitungen (19, 31, 34) verbindbar ist und mit einem Anschlußwerkzeug (4), das von dem Gehäuse (1) getragen ist, **dadurch gekennzeichnet, daß** die Kopplungseinrichtung mit einem Kontakt (12, 13) ausgerüstet ist, der vom Anschlußstutzen (14) des Prüflings in seiner Betriebsstellung betätigbar ist.

2. Kopplungseinrichtung nach Anspruch 1, **dadurch gekennzeichnet, daß** eine oder mehrere Absperreinrichtungen (12, 24) vorgesehen sind, mit denen zumindest ein Teil der, vorzugsweise alle in der Kopplungseinrichtung mündenden Versorgungsleitungen (31, 34) absperrbar sind.

3. Kopplungseinrichtung nach Anspruch 1 oder 2, **dadurch gekennzeichnet, daß** sie mit einem Kontakt (13) ausgerüstet ist, der bei ordnungsgemäß auf den Prüflingsanschluß (14) aufgesetzter Kopplungseinrichtung die Stirnseite des Anschlußstutzens des Prüflings berührt.

4. Kopplungseinrichtung nach Anspruch 3, **dadurch gekennzeichnet, daß** der der Stirnseite des Anschlußstutzens (14) zugeordnete Kontakt ein Dorn (12) mit einer im wesentlichen schneidenförmigen, vorzugsweise vergoldeten Stirnseite (13) ist.

5. Kopplungseinrichtung nach Anspruch 4, **dadurch gekennzeichnet,daß** die Stirnseite (13) des Dornes (12) eine zentrale Aussparung (36) aufweist.

6. Kopplungseinrichtung nach Anspruch 2 und einem der Ansprüche 4 oder 5, **dadurch gekennzeichnet,** daß der Dorn (12) gleichzeitig ein Bestandteil der Absperreinrichtung (12, 24) ist.

7. Kopplungseinrichtung nach Anspruch 6, **dadurch gekennzeichnet, daß** der Dorn (12) längsverschiebbar im Gehäuse (1) angeordnet ist.

8. Kopplungseinrichtung nach Anspruch 7, **dadurch gekennzeichnet, daß** das dem Dorn (12) vorgelagerte Anschlußwerkzeug (4) eine zentrale Öffnung (21) mit einer innenliegenden Dichtung (24) aufweist und daß der Dorn (12) zwischen zwei Endstellungen verschiebbar ist, in denen er entweder die zentrale Öffnung (21) des Anschlußwerkzeuges (4) freigibt und als Kontaktgeber bei ordnungsgemäß in das Werkzeug eingeführten Anschlußstutzen (14) dient oder die zentrale Öffnung (21) des Anschlußwerkzeuges (14) verschließt.

9. Kopplungseinrichtung nach Anspruch 7 oder 8, **dadurch gekennzeichnet, daß** dem Dorn (12) eine Zylinder-Kolben-Anordnung (7, 9) zur pneumatischen Betätigung zugeordnet ist.

10. Kopplungseinrichtung nach Anspruch 8, **dadurch gekennzeichnet, daß** die Dichtung (24) zwei Dichtringe (22, 23) mit einer Zwischenevakuierung aufweist.

11. Kopplungseinrichtung nach Anspruch 8, 9 oder 10, **dadurch gekennzeichnet, daß** sowohl das Werkzeug (4) als auch der Dorn (12) lösbar am Gehäuse (1) befestigt sind.

12. Kopplungseinrichtung nach einem der vorhergehenden Ansprüche, **dadurch gekennzeichnet,** daß zwischen einem Winkelstück (2), in dem die Versorgungsleitungen (19, 31, 34) münden, und dem Gehäuse (1) ein weiteres Winkelstück (37) angeordnet ist.

13. Kopplungseinrichtung nach einem der vorhergehenden Ansprüche, **dadurch gekennzeichnet,** daß die Dichtung (24) für die Abdichtung und Einspannung eines Anschlußstutzens im Werkzeug (4) auch als Dichtung für die Absperreinrichtung dient.

14. Kopplungseinrichtung nach einem der vorhergehenden Ansprüche, **dadurch gekennzeichnet,** daß die Schlauchleitung (3) drehbar am Winkelstück (2) befestigt ist.

## Claims

1. Coupling device for a leak detector and for a test part, which is provided with a connection piece (14) with a housing (1), which can be connected to the necessary supply lines (19, 31, 34), and a connection tool (4), which is supported by the housing (1), characterised in that the coupling device is provided with a contact (12, 13) which can be actuated by the connection piece (14) of the test part in its operating position.

2. Coupling device according to claim 1, characterised in that one or a plurality of shutoff devices (12, 24) are provided, by means of which at least some of the supply lines (31, 34), preferably all of which open out inside the coupling device, can be shut off.

3. Coupling device according to claim 1 or 2, characterised in that it is provided with a contact (13) which, when the coupling device is properly attached to the test part connection piece (14), contacts the front end of the test part connection piece.

4. Coupling device according to claim 3, characterised in that the contact, which is associated with the front end of the connection piece (14), comprises a pin (12) with an essentially knife-shaped, preferably gold-plated front end (13).

5. Coupling device according to claim 4, characterised in that the front end (13) of the pin (12) comprises a central recess (36).

6. Coupling device according to claim 2 and either of claims 4 and 5, characterised in that the pin (12) is at the same time a component part of the shutoff device (12, 24).

7. Coupling device according to claim 6, characterised in that the pin (12) is arranged such that it can be displaced in the longitudinal direction in the housing (1).

8. Coupling device according to claim 7, characterised in that the connection tool (4), which is disposed in front of the pin (12), has a central hole (21) with an internal seal (24) and that the pin (12) can be displaced between two end positions, in which it either frees the central hole (21) in the connection tool (4) and serves as a contactor when the connection piece (14) is properly inserted in the tool or closes the central hole (21) in the connection tool (4).

9. Coupling device according to claim 7 or 8, characterised in that a piston-cylinder arrangement (7, 9) for pneumatic actuation is associated with the pin (12).

10. Coupling device according to claim 8, characterised in that the seal (24) comprises two sealing rings (22, 23) with intermediate evacuation.

11. Coupling device according to claim 8, 9 or 10, characterised in that both the tool (4) and the pin (12) are secured to the housing (1) in a detachable manner.

12. Coupling device according to one of the preceding claims, characterised in that a further elbow (37) is arranged between an elbow (2), in which the supply lines (19, 31, 34) open out.

13. Coupling device according to one of the preceding claims, characterised in that the seal (24) for sealing and clamping a connection piece in the tool (4) also serves as a seal for the shutoff device.

14. Coupling device according to one of the preceding claims, characterised in that the hose line (3) is secured to the elbow (2) in a rotatable manner.

## Revendications

1. Dispositif de couplage pour un appareil de recherche de fuites et pour un objet à contrôler pourvu d'une tubulure de raccordement (14), comportant un carter (1) qui peut être relié aux conduites d'alimentation nécessaires (19, 31, 34) et un outil de raccordement (4) qui est porté par le carter (1), caractérisé par le fait que le dispositif de couplage est équipé d'un contact (12, 13) actionnable par la tubulure de raccordement (14) de l'objet à contrôler, dans sa position de fonctionnement.

2. Dispositif de couplage selon revendication 1, caractérisé par le fait qu'il est prévu un ou plusieurs moyens d'obturation (12, 24) avec lesquels au moins une partie, de préférence la totalité, des conduites d'alimentation (31, 34) débouchant dans le dispositif de couplage peut être fermée.

3. Dispositif de couplage selon revendication 1 ou 2, caractérisé par le fait qu'il est équipé d'un contact (13) qui, lorsque le dispositif de couplage est correctement emboîté sur le raccord (14) de l'objet à contrôler, touche la face frontale de la tubulure de raccordement de l'objet à contrôler.

4. Dispositif de couplage selon revendication 3, caractérisé par le fait que le contact conjugué à la face frontale de la tubulure de raccordement (14) est une broche (12) ayant une face frontale (13) sensiblement en forme de tranchant, de préférence dorée.

5. Dispositif de couplage selon revendication 4, caractérisé par le fait que la face frontale (13) de la broche (12) présente un évidement central (36).

6. Dispositif de couplage selon revendication 2 et l'une des revendications 4 ou 5, caractérisé par le fait que la broche (12) est en même temps un constituant des moyens d'obturation (12, 24).

7. Dispositif de couplage selon revendication 6, caractérisé par le fait que la broche (12) est agencée à coulissement longitudinal dans le carter (1).

8. Dispositif de couplage selon revendication 7, caractérisé par le fait que l'outil de raccordement (4) disposé en avant de la broche (12) présente une ouverture centrale (21) avec un moyen d'étanchéité (24) situé intérieurement, et par le fait que la broche (12) est déplaçable en translation entre deux positions extrêmes dans lesquelles soit elle libère l'ouverture centrale (21) de l'outil de raccordement (4) et sert d'organe établissant un contact dans le cas où la tubulure de raccordement (14) est introduite correctement dans l'outil, soit elle ferme l'ouverture centrale (21) de l'outil de raccordement (14).

9. Dispositif de couplage selon revendication 7 ou 8, caractérisé par le fait qu'à la broche (12) est conjugué un agencement cylindre-piston (7, 9) pour l'actionnement pneumatique.

10. Dispositif de couplage selon revendication 8, caractérisé par le fait que le moyen d'étanchéité (24) présente deux anneaux d'étanchéité (22, 23) avec une évacuation intermédiaire.

11. Dispositif de couplage selon revendication 8, 9 ou 10, caractérisé par le fait que l'outil (4) tout aussi bien que la broche (12) sont fixés amoviblement au carter (1).

12. Dispositif de couplage selon l'une des revendications précédentes, caractérisé par le fait qu'une autre pièce d'angle (37) est agencée en tant qu'intercalaire par rapport à une pièce d'angle (2) dans laquelle les conduites d'alimentation (19, 31, 34) débouchent.

13. Dispositif de couplage selon l'une des revendications précédentes, caractérisé par le fait que le moyen d'étanchéité (24) pour l'étanchéité et le serrage d'une tubulure de raccordement dans l'outil (4) sert également de moyen d'étanchéité pour le ou les moyens d'obturation.

14. Dispositif de couplage selon l'une des revendications précédentes, caractérisé par le fait que la conduite flexible (3) est fixée avec possibilité de rotation sur la pièce d'angle (2).

FIG.1

FIG.2

FIG.3

FIG.4